# EUROPEAN PATENT SPECIFICATION

(11) **EP 1 746 526 B1**
(45) Date of publication and mention of the grant of the patent: **12.09.2007**
(21) Application number: 05254542.3
(22) Date of filing: 21.07.2005
(51) Int. Cl.: G06K 7/00, G06K 13/08, H04B 1/38

(54) **SIM card reader**
SIM-Kartenleser
Lecteur de carte SIM

(43) Date of publication of application: 24.01.2007
(60) Divisional application: 07113746.7
(73) Proprietor: Research In Motion Limited, Waterloo, Ontario N2L 3W8 (CA)
(72) Inventor: Chen, Chao, Waterloo, Ontario N2T 2T8 (CA); Kyowski, Tim, Brantford, Ontario N3P 1Z8 (CA)
(74) Representative: Hibbert, Juliet Jane Grace

(56) References cited:
- EP-A- 0 893 777
- GB-A- 2 328 772
- US-A- 6 129 572
- US-A1- 2001 032 882

## Description

### BACKGROUND OF THE INVENTION

### Field of the Invention

The invention relates generally to electronic devices having a smart card therein and, more particularly, to a handheld electronic device that facilitates the insertion and/or removal of a smart card.

### Background Information

Numerous types of handheld electronic devices are known. Examples of such handheld electronic devices include, for instance, personal data assistants (PDAs), handheld computers, two-way pagers, cellular telephones, and the like.
Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon.

Many handheld electronic devices incorporate smart cards therein. The smart card may contain electronic memory and possibly an embedded integrated circuit (IC). One type of smart card is a subscriber identity module (SIM) card. A SIM card may be used, for example, in a digital or cellular wireless communication device to encrypt voice and data transmissions. The SIM card may also store data about the device user so that a digital or cellular network can identify and authenticate the user when the network is accessed. Additionally, the SIM card may be used to store the user's personal settings (such as phone numbers, display settings, ring tone settings, etc.).

Many handheld electronic devices are designed such that the SIM card can be removed by a user. Thus, multiple SIM cards can be swapped into a single handheld electronic device and/or a single SIM card can be swapped between multiple handheld electronic devices. For example, a user may employ a single handheld electronic device for both business and personal communication. Accordingly, a user can assemble (i.e., insert) a first SIM card containing the user's business settings and/or data into the handheld electronic device when conducting a business transaction (e.g., a phone call). After finishing the business transaction, the user can disassemble (i.e., remove) the first SIM card and assemble a second SIM card containing the user's personal settings and/or data into the handheld electronic device before conducting a personal transaction.

Due the reduced size of handheld electronic devices and SIM cards, however, assembly and disassembly of the SIM cards can be problematic. During assembly, for example, a user may not be able to properly align the SIM card within the handheld electronic device's SIM card holder frame thus making proper seating of the SIM card difficult if not impossible. During disassembly, a user may not be able to easily grasp the SIM card after it has been unseated from the SIM card holder frame. A user may be forced to flip over the handheld electronic device so that the SIM card falls away from the device, which increases the risk that the SIM card will be dropped and damaged.

Thus, a need exists for a handheld electronic device that facilitates the assembly and/or disassembly of a smart card.

GB-A-2328772 discloses a cellular telephone having a SIM card holder frame that exhibits some of the disadvantages associated with the prior art. Specifically, the arrangement of GB-A-2328772 includes a pairs of opposed guide rails that guide the SIM card into position in the holder frame. The guide rails are arranged such that the SIM card is a sliding fit therein, thereby requiring the SIM card to be aligned accurately with the rails in each of two directions perpendicular to the direction of insertion, before insertion between the guide rails can begin. Thus, insertion is inconvenient. Once insertion is begun, the rails guide the SIM card into position over a latch. The latch acts to prevent unwanted withdrawal of the SIM card once it has been inserted.

US-A-6129572 discloses an electrical connector for retaining an IC card. The connector includes sloped surfaces at an inlet portion of the connector, such that the inlet flares to a size slightly larger than the card, thereby easing insertion of the card into the connector. The connector also includes a latch for retaining the card in the connector.

### SUMMARY OF THE INVENTION

According to one aspect of this invention, there is provided a smart card holder frame as defined in claim 1 of the appended claims.

According to another aspect of this invention, there is provided a handheld electronic device as defined in claim 13.

Features of embodiments of the invention are defined in the dependent claims.

### BRIEF DESCRIPTION OF THE DRAWINGS

A full understanding of the invention can be gained from the following Description of the Preferred Embodiments when read in conjunction with the accompanying drawings in which:

Figure 1 is a top plan view of an improved handheld electronic device in accordance with one embodiment.

Figure 2 is a schematic depiction of the improved handheld electronic device of Figure 1.

Figure 3 is a perspective view of a SIM card.

Figure 4 is a perspective view of a smart card holder frame of the improved handheld device of Figure 1.

Figure 5A is a detailed perspective view of a card holder portion of the smart card holder frame of Figure 4.

Figure 5B is a detailed perspective view of the card holder portion of the smart card holder frame of Figure 4 according to an alternative embodiment.

Figure 6 is a detailed perspective view of an alignment structure portion of the smart card holder frame of Figure 4.

Figure 7 is a bottom perspective, cutaway view of a portion of the card holder frame of the improved handheld device of Figure 1.

Figures 8 - 10 illustrate assembly of a smart card into the smart card holder frame of the improved handheld device.

Figures 11 - 12 illustrate disassembly of a smart card from the smart card holder frame of the improved handheld device.

Similar numerals refer to similar parts throughout the specification.

### DESCRIPTION OF THE PREFERRED EMBODIMENTS

Directional phrases used herein, such as, for example, left, right, up, down, top, bottom, side, clockwise, counterclockwise, and derivatives thereof, relate to the orientation of the elements shown in the drawings and are not limiting upon the claims unless expressly recited therein. Additionally, as employed herein, the expression "a number of" and variations thereof shall refer broadly to any quantity, including a quantity of one.

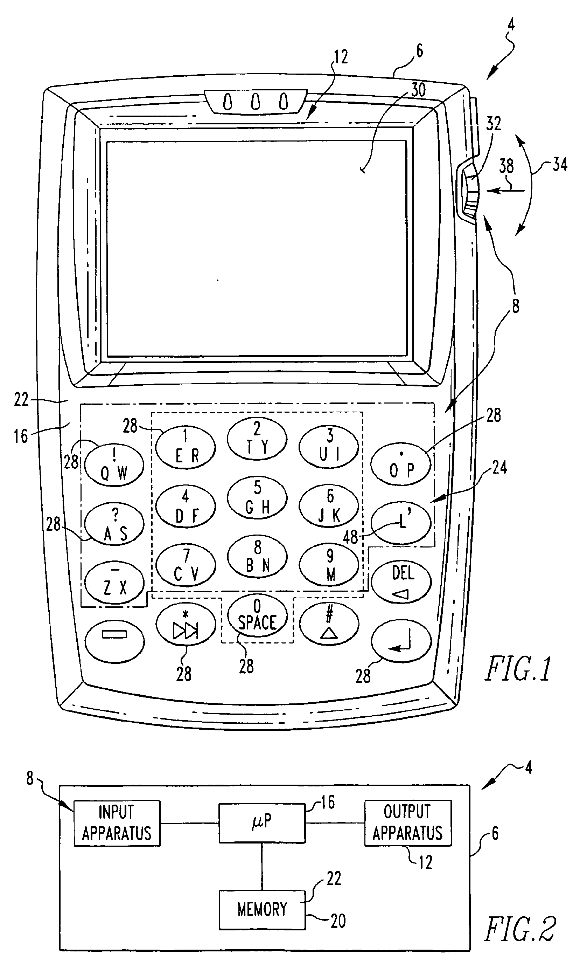

An improved handheld electronic device 4 is indicated generally in Figure 1 and is depicted schematically in Figure 2. The exemplary handheld electronic device 4 includes a housing 6 upon which are disposed a processor unit that includes an input apparatus 8, an output apparatus 12, a processor 16, and a memory 20. The housing 6 is adapted to carry the processor unit. In the current embodiment, the housing 6 includes a smart card holder frame 50 (not shown in Fig. 1). The processor 16 may be, for instance and without limitation, a microprocessor (µP) and is responsive to inputs from the input apparatus 8 and provides output signals to the output apparatus 12. The processor 16 also interfaces with the memory 20. Examples of handheld electronic devices are included in U.S. Patent Nos. 6,452,588 and 6,489,950.

As can be understood from Figure 1, the input apparatus 8 includes a keypad 24 and a thumbwheel 32. The keypad 24 is in the exemplary form of a reduced QWERTY keyboard including a plurality of keys 28 that serve as input members. The keys 28 are disposed on a front face of the housing 6, and the thumbwheel 32 is disposed at a side of the housing 6. The thumbwheel 32 can serve as another input member and is both rotatable, as is indicated by the arrow 34, to provide inputs to the processor 16, and also can be pressed in a direction generally toward the housing 6, as is indicated by the arrow 38, to provide other input to the processor 16. The output apparatus 12 includes a display 30 for displaying text, graphics, video, etc.

The memory 20, depicted schematically in Figure 2, can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. In the current embodiment, at least a portion of the storage media is incorporated within a smart card 11 (e.g., a SIM card) that interfaces with the processor 16. The memory 20 may include a number of routines depicted generally with the numeral 22 for the processing of data. The routines 22 can be in any of a variety of forms such as, without limitation, software, firmware, and the like.

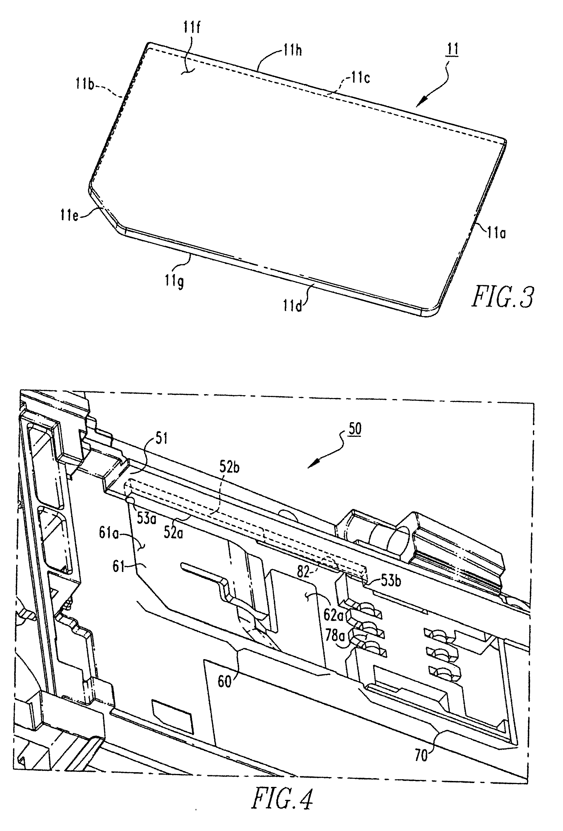

Fig. 3 is a perspective view of the smart card 11 used by the handheld electronic device 4 according to one embodiment. Smart card 11 is substantially rectangular in shape and includes a leading end 11a, a trailing end 11b, a first side 11c, and a second side 11d. The smart card 11 includes a top surface 11f and a bottom surface 11g and may further include an orientation key 11e to facilitate orientation of the smart card 11 during assembly. The smart card 11 may include one or more electrical contacts (not shown). The smart card 11 is generally rigid and may be constructed from any suitable material.

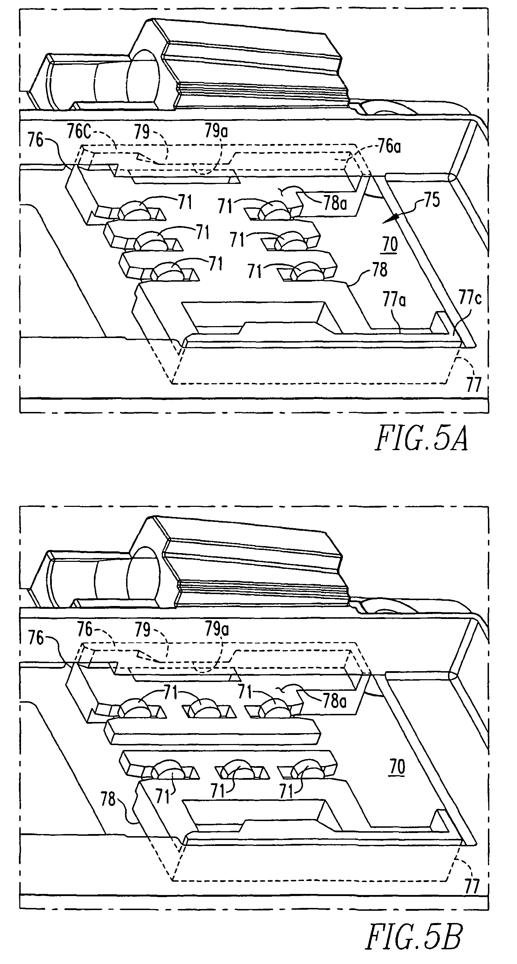

Fig. 4 illustrates a smart card holder frame 50 for the handheld electronic device 4. The smart card holder frame 50 includes an alignment structure 60 and a card holder 70 integrated therein and is of unitary construction, however, it may be advantageous that the smart card holder frame 50 be of non-unitary construction. The frame 50 also includes a member 51, which as seen in Fig. 4, may obstruct an observer's view of a portion of the card holder 70 and the alignment structure 60.

Fig. 5A is a detailed view of the card holder 70 which has a first wall 76 and a second wall 77. The second wall 77 has an inner surface 77a that is oriented parallel to and in opposition to an inner surface 76a of the first wall 76. The card holder 70 may also include a base 78 disposed between and separating the first wall 76 and second wall 77. As shown in Fig. 5A, the first wall 76, second wall 77, and base 78 are of unitary construction, however, it may be advantageous that the first wall 76, second wall 77, and base 78 be of non-unitary construction. For example, the base portion may be integrated into the bottom of the first wall 76 and into the bottom of the second wall 77 to form L-shaped channels (as shown in Fig. 5B) or to form C-shaped channels (not shown), or the base 78 may be disconnected from the first wall 76 and second wall 77 (not shown), among others.

The first wall 76 may have one or more connector clips 79 protruding therefrom. Likewise, the second wall 77 may have one or more connector clips 79 protruding therefrom. The card holder 70 has an open region 75 disposed between the inner surface 76a of the first wall 76, the inner surface 77a of the second wall 77, a top surface 78a of the base 78, and a bottom surface 79a of each of the connector clips 79. The open region 75 is configured to slidingly receive the smart card 11.

Base 78 also includes one or more spring members 71 protruding outwardly from the top surface 78a thereof. In the current embodiment, the spring members 71 function in combination with the connector clips 79 on the first and second walls (76, 77) when a smart card 11 is slidingly received within the open region 75. More specifically, the spring members 71 are configured to bias the smart card 11 towards the connector clips 79 (e.g., to bias the top surface 11 f of the smart card 11 into engagement with the bottom surfaces 79a of the connector clips 79). The spring members 71 may also function as electrical contacts which are electrically connectable with associated contacts (not shown) on the smart card 11 when the smart card is received in the open region 75, although the card holder 70 may employ separate spring members 71 and electrical contacts while remaining within the scope of the present invention. The electrical contacts of the base 78 are electrically connected with the processor 16 such that the processor 16 can interface with an assembled smart card 11.

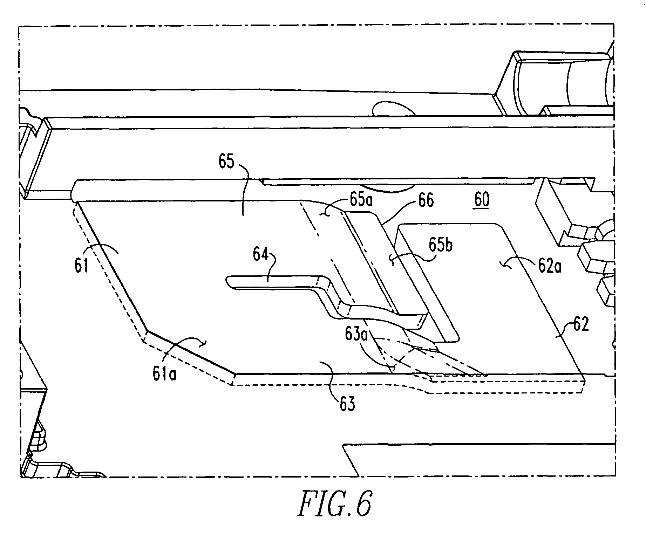

Fig. 6 is a detailed view of the alignment structure 60. The alignment structure 60 includes an upper region 61 which transitions into two prongs 63, 65 separated by a gap 64. The first prong 63 is referred to herein as lower support 63, whereas the second prong 65 is referred to herein as deflectable finger 65. The lower support 63 transitions into a lower region 62 via a first transition portion 63a. Deflectable finger 65 transitions (relative to upper region 61) into a lower portion 65b via a second transition portion 65a. The lower portion 65b of deflectable finger 65 terminates in edge 66, which aids in retaining an assembled smart card 11 as will be discussed in greater detail below.

Returning to Fig. 4, the top surface 62a of the lower region 62 is substantially coplanar with the top surface 78a of base 78. The upper region 61 and the portion of the lower support 63 disposed between the upper region 61 and the transition portion 63a together have a unitary and substantially planar surface 61 a, which is slightly elevated (from the perspective of Fig. 4) relative to a top surface 62a of the lower region 62 and the top surface 78a of base 78. A portion of the deflectable finger 65 disposed between the upper region 61 and the transition portion 65a however, is slightly elevated relative to planar surface 61 a. The deflectable finger 65, if deflected generally in the direction of the arrow 95 in Fig. 6, may act as a spring to bias the smart card 11 as will be discussed in more detail below.

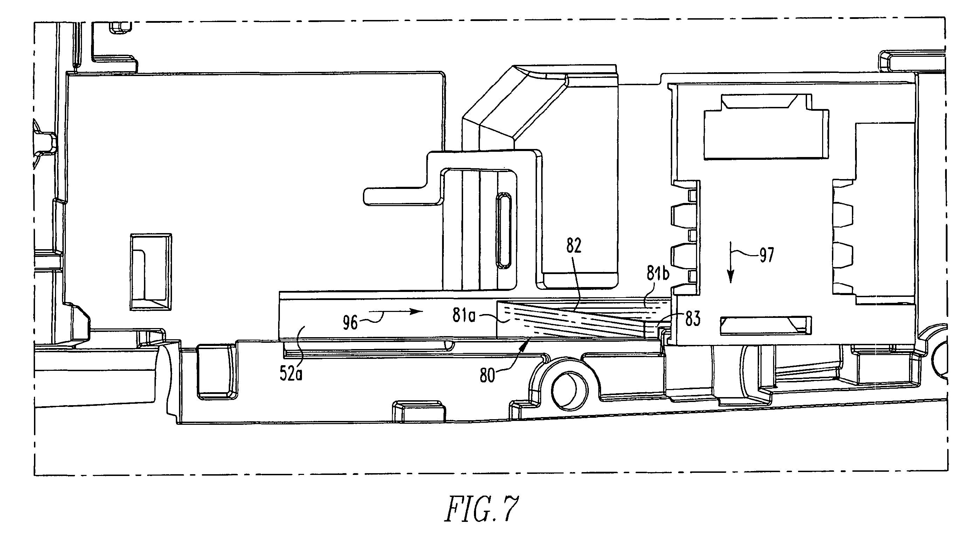

As mentioned above, the member 51 may obstruct an observer's view of a portion of the card holder 70 and/or the alignment structure 60. More specifically (and as best seen in Fig. 4), member 51 may obstruct the view of the card holder first wall 76, including its inner surface 76a and top surface 76c. Additionally, the view of the connector clip 79 protruding from the first wall 76 may also be obstructed. As a result, alignment of a smart card 11 with the card holder open region 75 during assembly may prove to be difficult. Accordingly, a guide 80 (as seen in Fig. 7) is provided on the member 51 to aid alignment of the smart card during assembly and to facilitate grasping the smart card during disassembly.

In the current embodiment, member 51 includes a recess 52 which begins at a first end 53a and terminates at a notch 53b. The recess 52 is advantageously sized to allow insertion of a side (e.g., first side 11c) of the smart card 11. The recess 52 includes a top surface 52a and a back surface 52b. The back surface 52b, which is substantially perpendicular with the top surface 52a, is aligned with the inner surface 76a of the first wall 76 of the card holder 70. When engaged with the back surface 52b, the smart card first side 11c is advantageously substantially aligned with the inner surface 76a of the first wall 76. In such a situation, the smart card second side 11d is similarly substantially aligned with the inner surface 77a of the second wall 77.

As best illustrated in Fig. 7 (which is a perspective-cutaway view of from the bottom), top surface 52a has guide 80 disposed thereon. Guide 80 includes a first sloped surface 81a and a second sloped surface 81b which share a common edge 82 and which converge into a flat surface 83. When traveling along the top surface 52a from first end 53a toward the notch 53b (as indicated generally by directional arrow number 96 in Fig. 7), the first sloped surface 81 a extends and angles away from the top surface 52a towards flat surface 83. Traveling towards the back surface 52b from the outside of recess 52 (as indicated generally by directional arrow number 97 in Fig. 7), the second sloped surface 81b extends and angles away from the top surface 52a towards the flat surface 83.

The smart card 11 engaged with the first sloped surface 81 a and/or the second sloped surface 81b (during assembly for example) is directed toward the flat surface 83. Flat surface 83 is aligned with, and substantially coplanar with, the bottom surfaces 79a of the connector clips 79 on the first and second walls (76, 77) of the card holder 70. As a result, a smart card 11 engaged with flat surface 83 is substantially aligned with the bottom surfaces 79a of the connector clips 79.

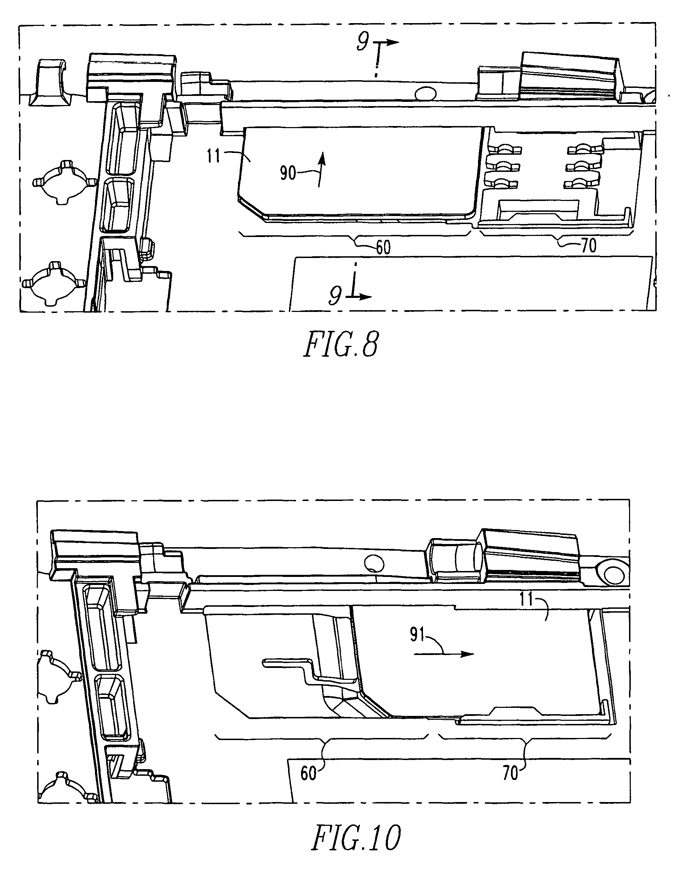

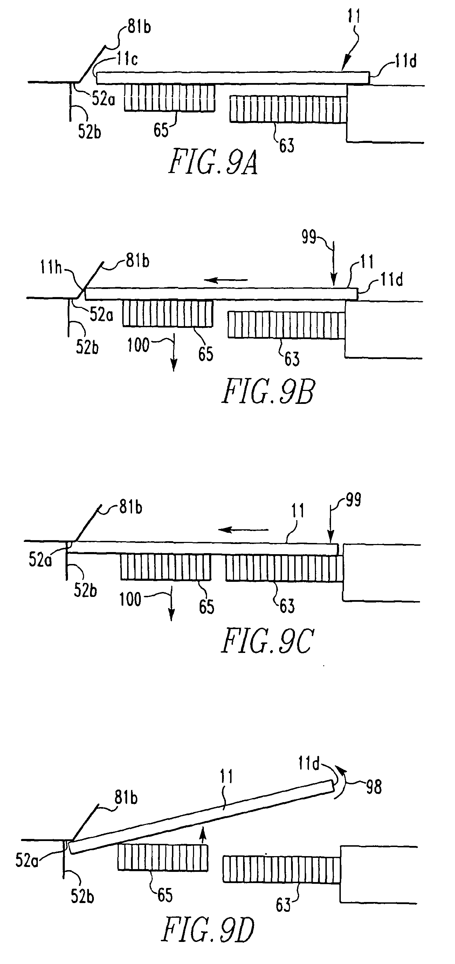

Figs. 8 - 10 illustrate the assembly of the smart card 11 into the smart card holder frame 50 of the improved handheld device 4. Fig. 8 illustrates a perspective view of the partially assembled smart card 11. As seen in Fig. 8, the first side 11c of the smart card 11 is received in the recess 52 of the frame 50 and is engaged with the back surface 52b (as generally indicated by the directional arrow 90). Thus, the first side 11c is substantially aligned with the card holder first wall inner surface 76a and the second side 11d is substantially aligned with the card holder second wall inner surface 77a. Although not shown in Fig. 9, a force is applied to the smart card top surface 11f, such as near the second side 11d, to deflect the deflectable finger 65. During assembly, this force may be applied by a user while simultaneously inserting the smart card 11 into recess 52.

Figs. 9A - 9D illustrate the steps that may be applied to obtain the partially assembled smart card 11 as illustrate in Fig. 8. Referring to Fig. 9A, the smart card 11 is placed on the alignment structure such that it rests on the portion of the deflectable finger 65 (i.e., between the upper region 61 and the transition portion 65a) that is slightly elevated relative to the lower support 63. Portions of the smart card 11 may rest on another portion of the frame 50.

Referring to Fig. 9B, the smart card 11 is moved such that an edge 11h between the top surface 11f and the first side 11c engages the second sloped surface 81b. Engagement of the second sloped surface 81b, in combination with the bias created by the deflectable finger 65, causes a torque on the smart card 11. This torque biases the second side 11 d upward (as best illustrated by directional arrow 98 in Fig. 9D). Accordingly, a downward force (as shown by directional arrow 99 in Fig. 9C) is applied by the user during assembly to counteract this torque. The downward force causes the deflectable finger 65 to deflect downward (as indicated by directional arrow 100 in Fig. 9C).

Referring to Fig. 9C, the smart card 11 is pushed further into recess 52, towards the back surface 52b. The edge 11h of the smart card 11 disengages from the second sloped surface 81 b, and at least a portion of the top surface 11f engages the top surface 52a of member 52. It should be noted that a portion of the first side 11c and/or a portion of the leading end 11a also engage the first sloped surface 81b. Application of the downward force to the second side 11d continues to counteract the torque on the smart card 11 and to further deflect the deflectable finger 65. As seen in Fig. 9C, the top surface of the deflectable finger 65 is substantially parallel with the flat surface on the portion of the lower support 63 (i.e., between the upper region 61 and the transition portion 63a) and the upper region 61. Furthermore as seen in Fig. 9c, the smart card 11 is no longer resting on the other portion of the frame 50 and is instead resting on the lower support 63 (and the upper region 61, not shown). In this position, the smart card 11 is aligned with the open region 75 between the inner surfaces 76a and 76b of the first and second walls 76 and 77, and thus is aligned in a horizontal plane (from the perspective of Fig. 9C).

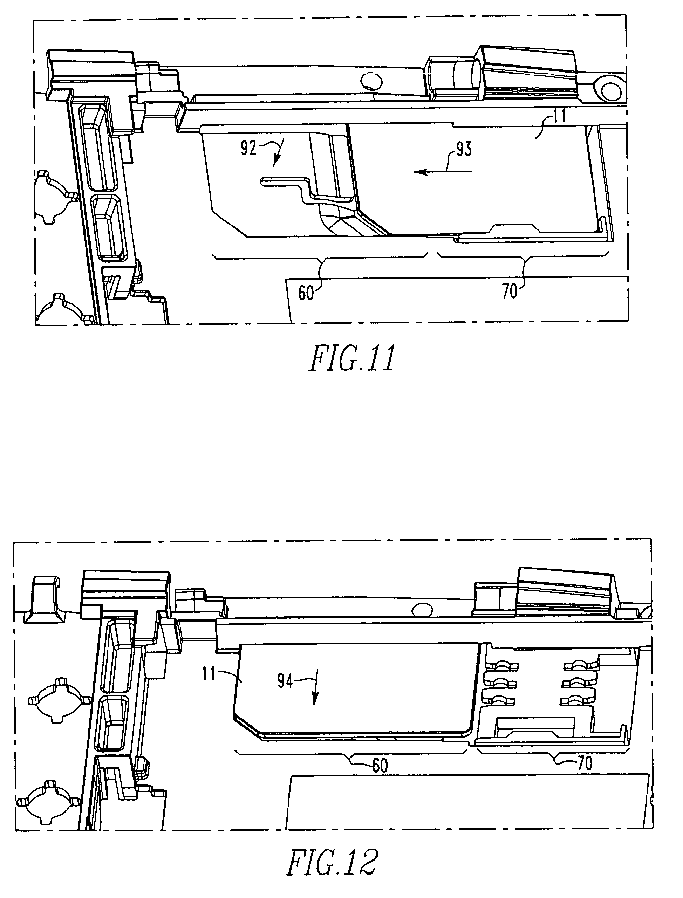

Next, the smart card 11 is moved towards the card holder 70 (as generally indicated by the directional arrow 91 in Fig. 10). The movement of the smart card 11 towards card holder 70 causes the portion of the leading end 11a that is in engagement with the first sloped surface 81 a to be moved away from the top surface 52a of the recess 52 and towards the flat surface 83. Although only a portion of the smart card leading end 11a engages the first sloped surface 81a, the entire leading end 11 a is moved as a rigid whole due to the rigidity of the smart card 11.

It should be noted that this movement of the leading end 11a toward the flat surface 83 causes the smart card leading end 11a to pitch slightly downward (i.e., away from top surface 52a). This downward pitching motion may encounter some resistance should the smart card trailing end 11b pitch upward about a pivot that is formed, for example, at the deflectable finger 65. The resistance may be caused by an increase in the contact force between the smart card trailing end 11b and the recess upper surface 52a. It should be realized that by applying a continuous downward force on deflectable finger 65 (e.g., by a user pushing down on the smart card 11 while simultaneously inserting the smart card 11) an advantageous reduction in the contact force between the smart card trailing end 11b and the recess upper surface 52a may be obtained.

As the smart card 11 continues towards the card holder 70, the leading end 11 a rides over the flat surface 83 such that the smart card top surface 11 f is in contact with the flat surface 83. As discussed above, flat surface 83 is aligned with, and substantially coplanar with, the bottom surfaces 79a of the connector clips 79 on the first and second walls (76, 77) of the card holder 70. As a result, the smart card top surface 11f is also substantially aligned with and coplanar with the bottom surfaces 79a of the connector clips 79 protruding from the first and second walls (76, 77) of the card holder 70 (i.e., the smart card 11, which is aligned between the bottom surfaces 79a and the top surface 78a of the base 78, can be said to be in alignment with the open region 75 in a vertical direction from the perspective of Fig. 9). Since the smart card 11 is aligned with the open region 75 in both the vertical and horizontal directions from the perspective of Fig. 9C, the smart card 11 can be said to be aligned with the open region 75. Therefore, further motion of the smart card 11 towards the card holder 70 allows the smart card 11 to enter the open space of the card holder 70 (i.e., the card holder 70 slidingly receives the smart card 11). It should be noted that additional vertical clearance may be provided to the open space to facilitate assembly of the smart card 11. Once fully assembled, however, the spring members 71 bias the smart card 11 towards the connector clips 79 to cause the top surface 11f of the smart card 11 to engage the bottom surfaces 79a of the connector clips 79.

Once the smart card trailing end 11b passes the deflectable finger edge 66 (e.g., once the smart card 11 is received within the card holder 70), the deflectable finger 65 returns to its free state (i.e., it is no longer deflected). At this point, the deflectable finger edge 66 is engageable with the smart card trailing end 11b to resist the smart card 11 from disengaging from the card holder 70.

Figs. 11 - 13 illustrate the disassembly of the smart card 11 from the smart card holder frame 50 of the improved handheld device 4. The deflectable finger 65 is deflected (i.e., flexed downward as generally indicated by the directional arrow 92 in Fig. 11) such that the deflectable finger edge 66 is clear of the trailing end 11b. Once clear, the smart card 11 is moved such that it slides away from the card holder 70 towards the alignment structure 60 (as generally indicated by the directional arrow 93 in Fig. 11). The smart card bottom surface 11g travels over and is disposed on the lower region 62.

As the smart card 11 is moved further, the trailing end 11b engages and follows the contour of the deflectable finger transition portion 65a and/or the contour of the lower support transition portion 63a. The deflectable finger transition portion 65a and/or the lower support transition portion 63a cause the trailing end 11b to pitch upwards.

Additionally, a pivot (as discussed above) may be formed while the smart card 11 is being disassembled. The pivot may cause the smart card 11 to encounter some resistance to the movement towards the alignment structure 60. The resistance may be caused by an increase in the contact force between, for example, the smart card leading end 11a and the base top surface 78a. As the smart card 11 is moved farther, a portion of the trailing end 11b (e.g., near the corner where the trailing end 11b and the first side end 11c meet) may come into contact with flat surface 83, first sloped surface 81a, and/or the recess top surface 52a. Contact with the flat surface 83, the first sloped surface 81a, and/or the recess top surface 52a may cause additional resistance to a movement of the smart card 11 towards the alignment structure 60. It should be realized that a downward force exerted on smart card top surface 11f (e.g., by a user pushing down on the smart card 11 while simultaneously sliding the smart card 11) may deflect deflectable finger 65 and cause an advantageous reduction in the contact force between the smart card leading end 11a and the base top surface 78a, and/or between the trailing end 11b and the flat surface 83, the first sloped surface 81a, and/or the recess top surface 52a.

The upward pitching of the trailing end 11b by the deflectable finger transition portion 65a and/or the lower support transition portion 63a permits the trailing end 11b of the smart card 11 to be easily grasped by a user. As a result, the user may continue to apply the aforementioned downward force to the smart card 11 while simultaneously pulling on the smart card 11. Thus, resistance encountered during disassembly may be more readily overcome.

At this point in the disassembly, the smart card 11 remains inserted inside recess 52 (i.e., the first side 11c is adjacent with the back surface 52b) and the deflectable finger 65 remains deflected (for example as illustrated in Fig. 9C). If the downward force applied to the smart card 11 is removed, the deflectable finger 65 returns to its free state. Because the first side 11c is in engagement with the top surface 52a and/or the second sloped surface 81b, the second side 11d to rotates upward (as shown in Fig. 9D) when the deflectable finger returns to its free state. The smart card 11 is thus "presented" for easy removal from the smart card holder frame 50 and the entire handheld device 4 does not need to be inverted to have the smart card 11 fall out of the recess 52.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended.

## Claims

1. A smart card holder frame (50) for an electronic device (4), said holder frame comprising:
a card holder (70) having a base (78), a first wall (76), a second wall (77), a connector clip (79), and an open region (75) structured to receive a smart card (11) therein, said open region (75) being disposed between said base (78), said first wall (76), said second wall (77), and said connector clip (79);
a member (51) having an abutment wall (52b) and first (8 1 a) and second (81b) non-coplanar sloped surfaces, the abutment wall (52b) and the sloped surfaces at least partly defining a recess (52) arranged to receive at least part of the smart card (11) for alignment in the open region (75); wherein the abutment wall (52b) is arranged to align the card (11) in a first direction (90), the second sloped surface (81b) is arranged to align the card (11) in a second direction when the card is moved in the recess (52) in the first direction (90), and the first sloped surface (81a) is arranged to align the card (11) in the second direction when the card is moved in the recess in a third direction (91); and
an alignment structure (60) comprising a deflectable finger (65) that is structured to bias said smart card (11) into engagement with at least one of said first sloped surface (81 a) and said second sloped surface (81 b), wherein said alignment structure (60) is adjacent said card holder (70) and wherein said member (51) is adjacent said card holder (70) and said alignment structure (60).

2. The smart card holder frame(50) of Claim 1 wherein said recess (52) is further defined by a top surface (52a) having said at least one of said first sloped surface (81a) and said second sloped surface (81b) being disposed in the recess (52).

3. The smart card holder frame (50) of Claim 2 wherein said abatment wall (52b) is structured to engage said smart card (11) and to align said smart card (11) between said first (76) and second (77) walls.

4. The smart card holder frame (50) of Claim 3 wherein at least one of said sloped surfaces (81a, 81b) is structured to slidingly engage said smart card (11) to align said smart card (11) between said base (78) and said connector clip (79).

5. The smart card holder frame (50) of Claim 1 wherein said alignment structure (60) includes an upper region (61) structured to receive said smart card (11) thereon when said smart card (11) is engaged with one of the first sloped surface (81a) and the second sloped surface(81b) and said finger (65) is in a deflected condition, said finger (65) being disposed adjacent the base (78) and biasing the smart card (11) away from said base (78).

6. The smart card holder frame (50) of Claim 1 wherein an inner surface (77a) of said second wall (77) is oriented parallel to and in opposition to an inner surface (76a) of said first wall (76) and wherein said base (78) is disposed between said first wall (76) and said second wall (77).

7. The smart card holder frame (50) of Claim 1 wherein said sloped surfaces (81a, 81b) converge into a flat surface (83), said flat surface (83) being substantially coplanar with a bottom surface (79a) of said connector clip (79).

8. The smart card holder frame (50) of Claim 1 wherein said alignment structure (60) includes a lower region (62), at least a portion of a top surface (62a) of said lower region (62) being oriented substantially coplanar with a top surface (78a) of said base (78).

9. The smart card holder frame (50) of Claim 1 wherein said base (78) includes one or more contacts structured to be electrically connectable with one or more contacts on said smart card (11).

10. The smart card holder frame (50) of Claim 8 wherein said base (78) includes one or more spring members (71) configured to bias said smart card (11) towards said connector clip (79).

11. The smart card holder frame (50) of Claim 9 wherein said contacts are on said spring members (71).

12. The smart card holder frame (50) of Claim 1 wherein said finger (65) in a free state is structured to be engageable with said smart card (11) to resist sliding disengagement of said smart card (11) from said open region (75).

13. A handheld electronic device (4) comprising a processor unit having a processor (16), an input apparatus (8), an output apparatus (12), and a memory (20) including a smart card (11); and a housing (6) adapted to carry said processor unit, said housing (6) including a smart card holder frame (50) according to any one of claim 1 to claim 12.

## Patentansprüche

1. Chipkartenhalterahmen (50) für eine elektronische Vorrichtung, wobei der Halterahmen umfasst:
Einen Kartenhalter (70), der eine Basis (78), eine erste Wand (76), eine zweite Wand (77), eine Verbindungsklemme (79) und einen offenen Bereich (75), welcher ausgebildet ist, darin eine Chipkarte (11) aufzunehmen, aufweist, wobei der offene Bereich (75) zwischen der Basis (78), der ersten Wand (76), der zweiten Wand (77) und der Verbindungsklemme (79) angeordnet ist,
ein Element (51) mit einer Anschlagswand (52b) und eine erste (81a) sowie zweite (81b) nicht koplanare abgeschrägte Fläche, wobei die Anschlagswand (52b) und die abgeschrägten Flächen wenigstens teilweise eine Ausnehmung (52) definieren, die vorgesehen ist, wenigstens einen Teil der Chipkarte (11) zur Ausrichtung in dem offenen Bereich (75) aufzunehmen, wobei die Anschlagswand (52b) vorgesehen ist, die Karte (11) in einer ersten Richtung (90) auszurichten, wobei die zweite abgeschrägte Fläche (81b) vorgesehen ist, die Karte (11) in einer zweiten Richtung auszurichten, wenn die Karte in der Ausnehmung (52) in der ersten Richtung (90) bewegt wird, und die erste abgeschrägte Fläche (81a) vorgesehen ist, die Karte (11) in der zweiten Richtung auszurichten, wenn die Karte in der Ausnehmung in einer dritten Richtung (91) bewegt wird, und
eine Ausrichtungsstruktur (60), die einen verformbaren Finger (65) umfasst, der ausgebildet ist, um die Chipkarte (11) in Eingriff mit wenigstens einer der ersten abgeschrägten Fläche (81a) und der zweiten abgeschrägten Fläche (81b) federnd zu beaufschlagen, wobei die Ausrichtungsstruktur (60) zu dem Kartenhalter (70) benachbart ist und wobei das Element (51) zu dem Kartenhalter (70) und der Ausrichtungsstruktur (60) benachbart ist.

2. Chipkartenhalterahmen (50) nach Anspruch 1, wobei die Ausnehmung (52) weiterhin durch eine obere Fläche (52a) mit der wenigstens einen der ersten abgeschrägten Fläche (81a) und der zweiten abgeschrägten Fläche (81b), die in der Ausnehmung (52) angeordnet ist, definiert ist.

3. Chipkartenhalterahmen (50) nach Anspruch 2, wobei die Anschlagswand (52b) ausgebildet ist, um auf die Chipkarte (11) einzuwirken und die Chipkarte (11) zwischen der ersten (76) und der zweiten (77) Wand auszurichten.

4. Chipkartenhalterahmen (50) nach Anspruch 3, wobei wenigstens eine der abgeschrägten Flächen (81a, 81b) ausgebildet ist, um auf die Chipkarte (11) gleitend einzuwirken, um die Chipkarte (11) zwischen der Basis (78) und der Verbindungsklemme (79) auszurichten.

5. Chipkartenhalterahmen (50) nach Anspruch 1, wobei die Ausrichtungsstruktur (60) einen oberen Bereich (61) umfasst, der ausgebildet ist, um die Chipkarte (11) darauf aufzunehmen, wenn die Chipkarte (11) mit einer der ersten abgeschrägten Fläche (81a) und der zweiten abgeschrägten Fläche (81b) in Eingriff gelangt und sich der Finger (65) in einem Biegezustand befindet, wobei der Finger (65) zu der Basis (78) benachbart angeordnet ist und die Chipkarte (11) von der Basis (78) weg federnd beaufschlagt.

6. Chipkartenhalterahmen (50) nach Anspruch 1, wobei eine innere Oberfläche (77a) der zweiten Wand (77) parallel zu und entgegen einer inneren Oberfläche (76a) der ersten Wand (76) ausgerichtet ist und wobei die Basis (78) zwischen der ersten Wand (76) und der zweiten Wand (77) angeordnet ist.

7. Chipkartenhalterahmen (50) nach Anspruch 1, wobei die abgeschrägten Flächen (81a, 81b) in eine flache Fläche (83) konvergieren, wobei die flache Fläche (83) im Wesentlichen koplanar zu einer unteren Fläche (79a) der Verbindungsklemme (79) ist.

8. Chipkartenhalterahmen (50) nach Anspruch 1, wobei die Ausrichtungsstruktur (60) einen unteren Bereich (62), wenigstens einen Abschnitt einer oberen Fläche (62a) des unteren Bereichs (62), der im Wesentlichen koplanar zu einer oberen Fläche (78a) der Basis (78) ausgerichtet ist, umfasst.

9. Chipkartenhalterahmen (50) nach Anspruch 1, wobei die Basis (78) einen oder mehrere Kontakte, die ausgebildet sind, um mit einem oder mehreren Kontakten an der Chipkarte (11) elektrisch verbindbar zu sein, umfasst.

10. Chipkartenhalterahmen (50) nach Anspruch 8, wobei die Basis (78) ein oder mehrere Federelemente (71), die ausgebildet sind, um die Chipkarte (11) hin zu der Verbindungsklemme (79) federnd zu beaufschlagen, umfasst.

11. Chipkartenhalterahmen (50) nach Anspruch 9, wobei sich die Kontakte an den Federelementen (71) befinden.

12. Chipkartenhalterahmen (50) nach Anspruch 1, wobei der Finger (65) in einem freien Zustand ausgebildet ist, um mit der Chipkarte (11) in Eingriff bringbar zu sein, um einer gleitenden Außereingriffbringung der Chipkarte (11) aus dem offenen Bereich (75) standzuhalten.

13. Tragbare elektronische Vorrichtung (4), die eine Prozessoreinheit umfasst, welche einen Prozessor (16), eine Eingabeeinrichtung (8), eine Ausgabeeinrichtung (12) und einen Speicher (20) aufweist, umfassend eine Chipkarte (11) und ein Gehäuse (6), das geeignet ist, die Prozessoreinheit zu tragen, wobei das Gehäuse (6) einen Chipkartenhalterahmen (50) nach einem der Ansprüche 1 bis 12 umfasst.

## Revendications

1. Châssis (50) de support de carte à puce pour un dispositif électronique (4), ledit châssis de support comprenant :
un support de carte (70) ayant un socle (78), une première paroi (76), une deuxième paroi (77), une attache de connexion (79) et une région ouverte (75) dont la structure permet de recevoir une carte à puce (11) dans celle-ci, ladite région ouverte (75) étant disposée entre ledit socle (78), ladite première paroi (76), ladite deuxième paroi (77) et ladite attache de connexion (79) ;
un élément (51) ayant une paroi de butée (52b) et des première (81a) et deuxième (81b) surfaces inclinées non coplanaires, la paroi de butée (52b) et les surfaces inclinées définissant au moins partiellement un évidement (52) agencé de façon à recevoir au moins une partie de la carte à puce (11) pour son alignement dans la région ouverte (75) ; dans lequel la paroi de butée (52b) est agencée de façon à aligner la carte (11) dans une première direction (90), la deuxième surface inclinée (81b) est agencée de façon à aligner la carte (11) dans une deuxième direction lorsque la carte est déplacée dans l'évidement (52) dans la première direction (90), et la première surface inclinée (81a) est agencée à façon à aligner la carte (11) dans la deuxième direction lorsque la carte est déplacée dans l'évidement dans une troisième direction (91) ; et
une structure d'alignement (60) comprenant un doigt pouvant être écarté (65) dont la structure permet de solliciter ladite carte à puce (11) pour qu'elle s'engage sur au moins l'une de ladite première surface inclinée (81a) et de ladite deuxième surface inclinée (81b), ladite structure d'alignement (60) étant adjacente audit support de carte (70) et ledit élément (51) étant adjacent audit support de carte (70) et à ladite structure d'alignement (60).

2. Châssis (50) de support de carte à puce selon la revendication 1, dans lequel ledit évidement (52) est en outre défini par une surface supérieure (52a) ayant ladite au moins une de ladite première surface inclinée (81a) et de ladite deuxième surface inclinée (81b) disposée dans l'évidement (52).

3. Châssis (50) de support de carte à puce selon la revendication 2, dans lequel ladite paroi de butée (52b) a une structure pouvant s'engager sur ladite carte à puce (11) et aligner ladite carte à puce (11) entre lesdites première (76) et deuxième (77) parois.

4. Châssis (50) de support de carte à puce selon la revendication 3, dans laquelle au moins l'une desdites surfaces inclinées (81a, 81b) a une structure pouvant s'engager de façon coulissante sur ladite carte à puce (11) afin d'aligner ladite carte à puce (11) entre ledit socle (78) et ladite attache de connexion (79).

5. Châssis (50) de support de carte à puce selon la revendication 1, dans lequel ladite structure d'alignement (60) comprend une région supérieure (61) dont la structure permet de recevoir ladite carte à puce (11) sur celle-ci lorsque ladite carte à puce (11) s'engage sur l'une de la première surface inclinée (81a) et de la deuxième surface inclinée (81b) et ledit doigt (65) est dans un état écarté, ledit doigt (65) étant disposé de façon adjacente au socle (78) et sollicitant la carte à puce (11) pour l'écarter dudit socle (78).

6. Châssis (50) de support de carte à puce selon la revendication 1, dans lequel une surface intérieure (77a) de ladite deuxième paroi (77) est orientée parallèlement et de façon opposée à une surface intérieure (76a) de ladite première paroi (76) et dans lequel ledit socle (78) est disposé entre ladite première paroi (76) et ladite deuxième paroi (77).

7. Châssis (50) de support de carte à puce selon la revendication 1, dans lequel lesdites surfaces inclinées (81a, 81b) convergent en une surface plane (83), ladite surface plane (83) étant sensiblement coplanaire avec une surface inférieure (79a) de ladite attache de connexion (79).

8. Châssis (50) de support de carte à puce selon la revendication 1, dans lequel ladite structure d'alignement (60) comprend une région inférieure (62), au moins une partie d'une surface supérieure (62a) de ladite région inférieure (62) étant orientée de façon sensiblement coplanaire avec une surface supérieure (78a) dudit socle (78).

9. Châssis (50) de support de carte à puce selon la revendication 1, dans lequel ledit socle (78) comprend un ou plusieurs contacts dont la structure permet de les connecter électriquement à un ou plusieurs contacts présents sur ladite carte à puce (11).

10. Châssis (50) de support de carte à puce selon la revendication 8, dans lequel ledit socle (78) comprend un ou plusieurs éléments à ressort (71) configurés pour solliciter ladite carte à puce (11) vers ladite attache de connexion (79).

11. Châssis (50) de support de carte à puce selon la revendication 9, dans lequel lesdits contacts sont sur lesdits éléments à ressort (71).

12. Châssis (50) de support de carte à puce selon la revendication 1, dans lequel ledit doigt (65), dans un état libre, a une structure lui permettant de s'engager sur ladite carte à puce (11) afin de résister au dégagement par coulissement de ladite carte à puce (11) d'avec ladite région ouverte (75).

13. Dispositif électronique portatif (4) comprenant une unité de traitement ayant un processeur (16), un appareil d'entrée (8), un appareil de sortie (12), une mémoire (20) comprenant une carte à puce (11) ; et un logement (6) conçu pour porter ladite unité de traitement, ledit logement (6) comprenant un châssis (50) de support de carte à puce selon l'une quelconque des revendications 1 à 12.
